# EUROPEAN PATENT APPLICATION

(11) **EP 4 421 366 A1**
(43) Date of publication of application: **28.08.2024**
(21) Application number: 22879637.1
(22) Date of filing: 26.09.2022
(51) Int. Cl.: F16K 31/04, F16K 37/00

(54) **ELECTRIC VALVE CONTROL DEVICE AND ELECTRIC VALVE DEVICE**

(30) Priority: 19.10.2021 JP 2021171258
(71) Applicant: Fujikoki Corporation, Tokyo 158-0082 (JP)
(72) Inventor: NARUKAWA Bunta, Tokyo 158-0082 (JP); NISHIMORI Hiroki, Tokyo 158-0082 (JP)
(74) Representative: Ter Meer Steinmeister & Partner
(86) International application number: PCT/JP2022/035700
(87) International publication number: WO 2023/067988

(57) **Abstract**

Provided are an electric valve control device and an electric valve device that are capable of suppressing the position of a rotor of a motor from existing beyond a position corresponding to a maximum opening degree of an electric valve. An electric valve device (1) includes an electric valve (5) and an electric valve control device (70). The electric valve (5) includes a stepping motor (66). The electric valve control device (70) controls the electric valve (5). The electric valve control device (70) has present valve opening degree information indicating a present valve opening degree of the electric valve (5) and changes a valve opening degree of the electric valve (5) within a range from a minimum opening degree to a maximum opening degree based on the present valve opening degree information. When the electric valve control device (70) detects an abnormality in the electric valve (5), the electric valve control device (70) sets the maximum opening degree in the present valve opening degree information.

## Description

### Technical Field

The present invention relates to an electric valve control device and an electric valve device including the electric valve control device.

### Background Art

Patent Literature 1 discloses an example of an electric valve of the related art. The electric valve is incorporated in a refrigeration cycle system of an air conditioner. The electric valve includes a valve body, a valve member, and a stepping motor for moving the valve member. The stepping motor includes a rotor and a stator. When a pulse is input to the stepping motor, the rotor rotates. In accordance with the rotation of the rotor, the valve member moves and the valve opening degree of the electric valve is changed.

The electric valve is controlled by an electric valve control device. The electric valve control device changes the valve opening degree of the electric valve within a range from a minimum opening degree to a maximum opening degree (for example, a range of 0% to 100%). The electric valve control device has information indicating the valve opening degree of the electric valve at present (present valve opening degree information). When the electric valve control device receives an instruction to change the valve opening degree of the electric valve from an air conditioning control device, the electric valve control device inputs the number of pulses calculated on the basis of the present valve opening degree information to the stepping motor to change the valve opening degree of the electric valve to a valve opening degree specified by the instruction.

### Citation List

### Patent Literature

Patent Literature 1: Japanese Unexamined Patent Application Publication No. 2012-13197

### Summary of Invention

### Technical Problem

Due to occurrence of an abnormality such as a rotation failure of the rotor caused by a reduction in a power supply voltage of the electric valve or foreign matter in a refrigerant, the valve opening degree indicated in the present valve opening degree information may differ from the actual valve opening degree of the electric valve. The actual valve opening degree of the electric valve may be larger than the valve opening degree indicated in the present valve opening degree information. When, at this time, the electric valve control device receives an instruction to change the valve opening degree of the electric valve to the maximum opening degree, the rotor rotates in a valve opening direction and the position of the rotor exists beyond a position corresponding to the maximum opening degree. Therefore, the rotor may be detached from a thread mechanism that changes the rotation of the rotor into a linear movement, or a step-out may occur in the stepping motor. Even in an electric valve including a motor of a type differing from the stepping motor, malfunctioning may occur as a result of the position of a rotor of the motor existing beyond the position corresponding to the maximum opening degree.

Accordingly, it is an object of the present invention to provide an electric valve control device capable of suppressing the position of a rotor of a motor from existing beyond a position corresponding to a maximum opening degree of an electric valve and an electric valve device including the electric valve control device.

### Solution to Problem

To achieve the object above, an electric valve control device according to an aspect of the present invention is an electric valve control device for controlling an electric valve including a motor, in which the electric valve control device has present valve opening degree information indicating a present valve opening degree of the electric valve and changes a valve opening degree of the electric valve within a range from a minimum opening degree to a maximum opening degree based on the present valve opening degree information, and in which, when the electric valve control device detects an abnormality in the electric valve, the electric valve control device sets the maximum opening degree in the present valve opening degree information.

In the present invention, it is preferable that the electric valve control device include a non-volatile storage section that stores state information indicating a state of the electric valve at a previous end-of-control time and previous valve opening degree information indicating a valve opening degree of the electric valve at the previous end-of-control time, in which, when the state information is information indicating a normal end when control of the electric valve is started, the electric valve control device sets in the present valve opening degree information the valve opening degree indicated in the previous valve opening degree information, and sets in the state information information indicating an abnormal end, in which, when the state information is the information indicating the abnormal end when the control of the electric valve is started, the electric valve control device sets the maximum opening degree in the present valve opening degree information, and in which, when the state information is the information indicating the normal end when the control of the electric valve is started, and when no abnormality is detected in the electric valve after starting the control of the electric valve, the electric valve control device sets in the state information the information indicating the normal end when the control of the electric valve ends.

To achieve the object above, an electric valve device according to another aspect of the present invention includes the electric valve and the electric valve control device.

### Advantageous Effects of Invention

According to the present invention, the electric valve control device has the present valve opening degree information indicating the present valve opening degree of the electric valve, and changes the valve opening degree of the electric valve within the range from the minimum opening degree to the maximum opening degree on the basis of the present valve opening degree information. When the electric valve control device detects an abnormality in the electric valve, the electric valve control device sets the maximum opening degree in the present valve opening degree information. Therefore, when the electric valve control device detects the abnormality in the electric valve, the electric valve control device assumes that the valve opening degree of the electric valve is the maximum opening degree regardless of the actual valve opening degree of the electric valve. Consequently, the electric valve control device is capable of inhibiting the rotor from rotating in a valve opening direction beyond a position corresponding to the actual valve opening degree of the electric valve when the electric valve control device detects the abnormality. Thus, the electric valve control device is capable of suppressing the position of the rotor of the motor from existing beyond the position corresponding to the maximum opening degree.

### Brief Description of Drawings

[Fig. 1] Fig. 1 is a block diagram of an air conditioning system including an electric valve device according to an embodiment of the present invention.
[Fig. 2] Fig. 2 is a sectional view of the electric valve device in Fig. 1.
[Fig. 3] Fig. 3 is a plan view of a valve stem holder, a stopper member, a rotor, and a stator of the electric valve device in Fig. 2.
[Fig. 4] Fig. 4 is a diagram illustrating a computer, a motor driver, and a stepping motor of the electric valve device in Fig. 2.
[Fig. 5] Fig. 5 is a flowchart showing an example of a process that is executed by the computer of the electric valve device in Fig. 2.
[Fig. 6] Fig. 6 is a flowchart showing the example of the process that is executed by the computer of the electric valve device in Fig. 2 (continuation of Fig. 5).

### Description of Embodiments

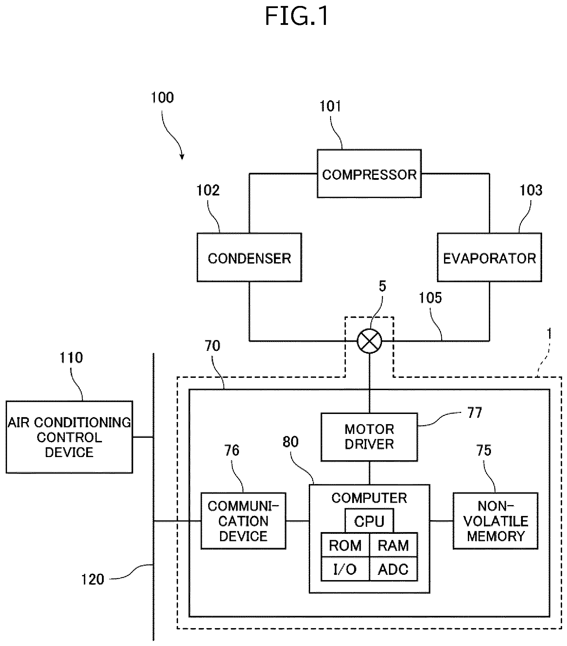

An electric valve device according to an embodiment of the present invention is described below with reference to Figs. 1 to 6. An electric valve device 1 according to the present embodiment is used as, for example, a flow rate control valve that controls the flow rate of a refrigerant in a refrigeration cycle system of an air conditioner.

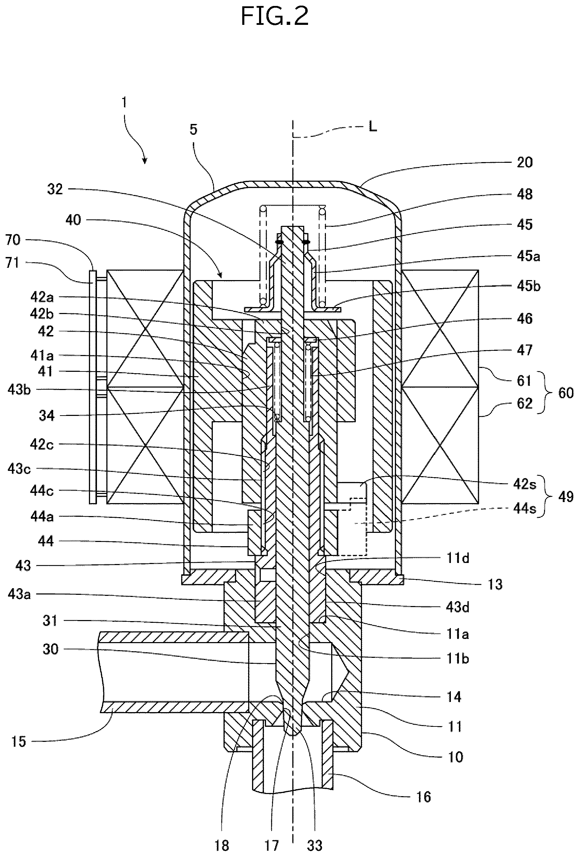

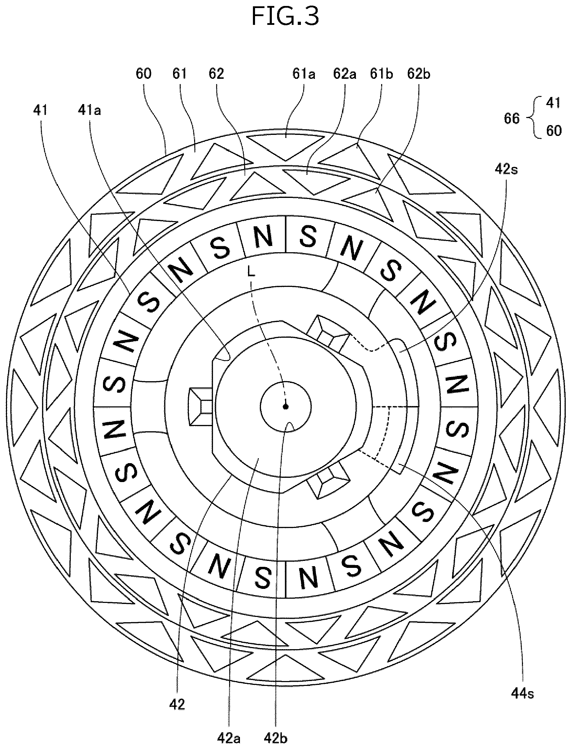

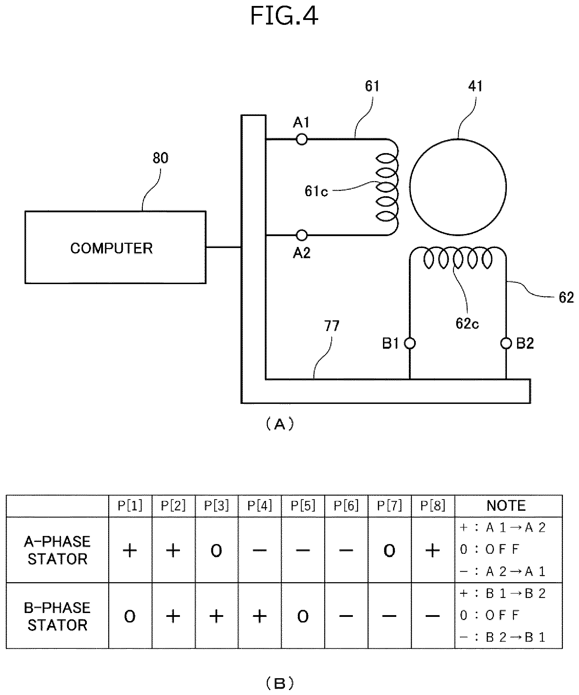

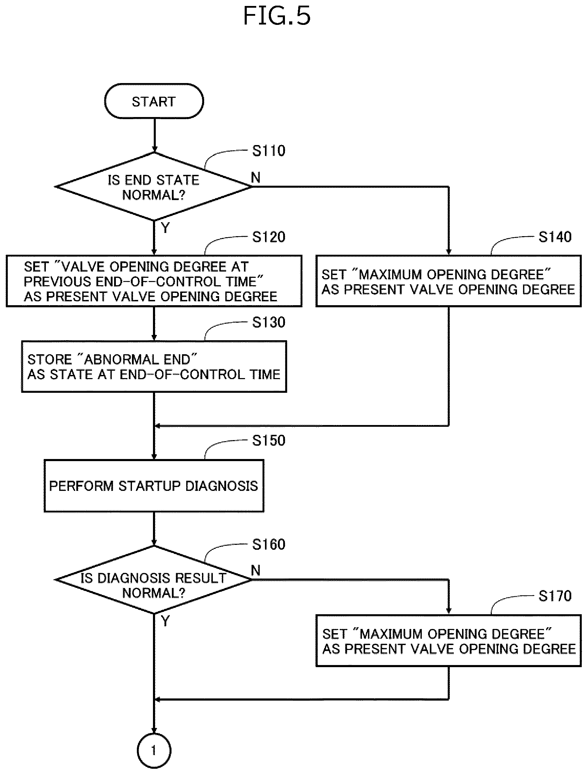

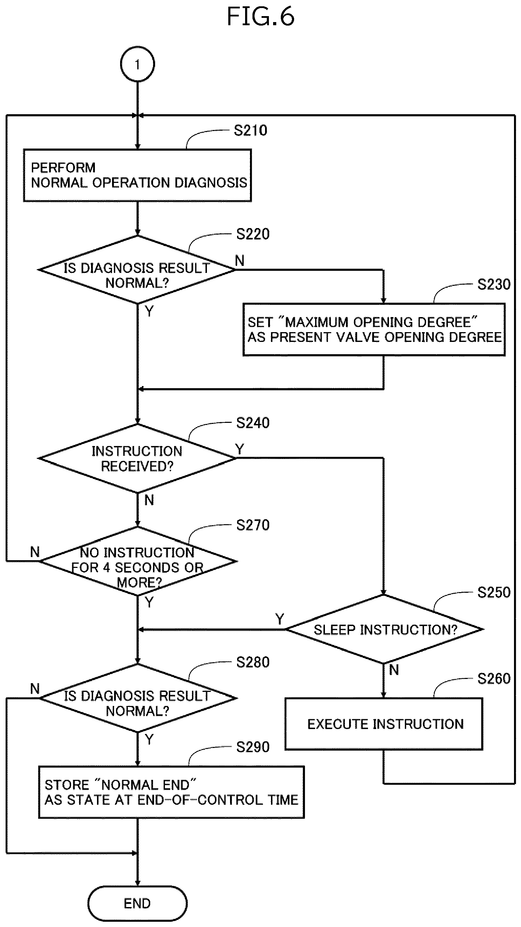

Fig. 1 is a block diagram of an air conditioning system including an electric valve device according to the embodiment of the present invention. Fig. 2 is a sectional view of the electric valve device in Fig. 1. Fig. 2 schematically shows a stator and an electric valve control device. Fig. 3 is a plan view of a valve stem holder, a stopper member, a rotor, and the stator of the electric valve device in Fig. 2. Fig. 3 schematically shows the stator. Fig. 3 also schematically shows magnetic poles of the rotor. Fig. 4 is a diagram illustrating a computer, a motor driver, and a stepping motor of the electric valve device in Fig. 2. Fig. 4A schematically shows a connection of the computer, the motor driver, and the stepping motor. Fig. 4B shows an example of correspondence between pulse and driving current that is supplied to the stator by the motor driver. Figs. 5 and 6 are each a flowchart showing an example of a process that is executed by the computer of the electric valve device in Fig. 2.

Fig. 1 shows an example of an air conditioning system 100 mounted on a vehicle. The air conditioning system 100 includes a compressor 101, a condenser 102, the electric valve device 1 (electric valve 5), and an evaporator 103, which are connected in this order through a pipe 105. The electric valve device 1 functions as an expansion valve. The air conditioning system 100 includes an air conditioning control device 110. The air conditioning control device 110 is connected to the electric valve device 1 and is capable of communication with the electric valve device 1. The air conditioning control device 110 uses the electric valve device 1 to control the flow rate of a refrigerant that flows through the pipe 105.

As shown in Fig. 2, the electric valve device 1 includes the electric valve 5 and an electric valve control device 70.

The electric valve 5 includes a valve body 10, a can 20, a valve member 30, a driving mechanism 40, and a stator 60.

The valve body 10 includes a body member 11 and a connecting member 13. The body member 11 has a circular columnar shape. The body member 11 includes a valve chamber 14. A first conduit 15 and a second conduit 16 are bonded to the body member 11. The first conduit 15 is disposed along a direction (left-and-right direction in Fig. 2) perpendicular to an axis L, and is connected to the valve chamber 14. The second conduit 16 is disposed along a direction of the axis L (up-and-down direction in Fig. 2), and is connected to the valve chamber 14 through a valve port 17. The valve port 17 is enclosed by a valve seat 18, which has a circular annular shape, in the valve chamber 14. The body member 11 has a fitting hole 11a having a circular shape. The fitting hole 11a is provided in the upper end surface of the body member 11. The inner peripheral surface of the fitting hole 11a includes a planar part 11d facing leftwards in Fig. 2. A through hole 11b is provided in the bottom surface of the fitting hole 11a and communicates with the valve chamber 14. The connecting member 13 has a circular annular plate-like shape. The inner peripheral edge of the connecting member 13 is bonded to the upper end portion of the body member 11. The body member 11 and the connecting member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connecting member 13.

The valve member 30 includes a first stem portion 31, a second stem portion 32, and a valve portion 33. The first stem portion 31 has a circular columnar shape. The second stem portion 32 has a circular columnar shape. The diameter of the second stem portion 32 is smaller than the diameter of the first stem portion 31. The second stem portion 32 is provided coaxially and continuously with the upper end of the first stem portion 31. The valve member 30 includes a step portion 34 that is an annular plane facing upward. The step portion 34 is disposed in a part of the valve member 30 where the first stem portion 31 and the second stem portion 32 are continuously provided. The valve portion 33 has a substantially circular conical shape whose diameter decreasing from top to bottom. The valve portion 33 is provided coaxially and continuously with the lower end of the first stem portion 31. The valve portion 33 is disposed in the valve port 17. A variable throttle passage is formed between the valve portion 33 and the valve port 17. The valve portion 33 faces the valve seat 18. When the valve portion 33 is in contact with the valve seat 18, the valve port 17 is closed.

The driving mechanism 40 moves the valve member 30 in the up-and-down direction (the direction of the axis L). The movement of the valve member 30 changes the opening degree of the valve port 17 (that is, the valve opening degree of the electric valve 5). The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer peripheral surface of the rotor 41. The N poles and the S poles each extend in the up-and-down direction. The N poles and the S poles are alternately arranged at equal angular intervals in the peripheral direction. In the electric valve device 1, the rotor 41 has, for example, twelve N poles and twelve S poles. The angle between adjacent N and S poles is 15 degrees.

The valve stem holder 42 has a circular cylindrical shape. The valve stem holder 42 is open at the lower end and is closed at the upper end. The valve stem holder 42 is fitted to a fitting hole 41a of the rotor 41. The valve stem holder 42 rotates together with the rotor 41. A movable stopper 42s is disposed on the lower end portion of the outer peripheral surface of the valve stem holder 42 and is a protrusion extending radially outward. The valve stem holder 42 has a stem hole 42b. The stem hole 42b is provided in an upper wall portion 42a of the valve stem holder 42. The second stem portion 32 of the valve member 30 is disposed in the stem hole 42b movably in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring, and pushes the valve member 30 toward the valve seat 18. An internal thread 42c is formed on the inner peripheral surface of the valve stem holder 42. The movable stopper 42s is fixed with respect to the rotor 41.

The guide bush 43 includes a base portion 43a and a supporting portion 43b. The base portion 43a has a circular cylindrical shape. The supporting portion 43b has a circular cylindrical shape. The outer peripheral surface of the base portion 43a has a planar part 43d. The base portion 43a is press-fitted into the fitting hole 11a of the body member 11, and the planar part 43d is in contact with the planar part 11d of the fitting hole 11a. Therefore, the central axis of the body member 11 and the central axis of the guide bush 43 coincide on the axis L, and the guide bush 43 is properly positioned around the axis L with respect to the body member 11. The outer diameter of the supporting portion 43b is smaller than the outer diameter of the base portion 43a. The inner diameter of the supporting portion 43b is the same as the inner diameter of the base portion 43a. The supporting portion 43b is provided coaxially and continuously with the upper end of the base portion 43a. An external thread 43c is formed on the outer peripheral surface of the supporting portion 43b. The external thread 43c is screwed into the internal thread 42c of the valve stem holder 42. The valve stem holder 42 and the guide bush 43 constitute a thread mechanism that changes the rotation of the rotor 41 into a linear movement. The first stem portion 31 of the valve member 30 is disposed inside the guide bush 43. The guide bush 43 supports the valve member 30 movably in the direction of the axis L.

The stopper member 44 includes a stopper body 44a. The stopper body 44a has a circular cylindrical shape. An internal thread 44c is formed on the inner peripheral surface of the stopper body 44a. A fixed stopper 44s is disposed on the outer peripheral surface of the stopper body 44a and is a protrusion extending radially outward. The external thread 43c is screwed into the internal thread 44c until the stopper body 44a comes into contact with the base portion 43a of the guide bush 43. This enables the stopper member 44 to be fixed to the guide bush 43. The fixed stopper 44s is fixed with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is provided continuously with the lower end of the fixed portion 45a. A return spring 48 is disposed outside the fixed member 45. The return spring 48 is a coil spring. Note that the return spring 48 is not a necessary component in the present invention.

The stator 60 has a circular cylindrical shape. The stator 60 includes an A-phase stator 61 and a B-phase stator 62.

The A-phase stator 61 includes a plurality of claw-pole-type pole teeth 61a and 61b at its inner periphery. The tip end of each pole tooth 61a faces downward, and the tip end of each pole tooth 61b faces upward. The pole teeth 61a and the pole teeth 61b are alternately arranged at equal angular intervals in the peripheral direction. In the electric valve device 1, the A-phase stator 61 includes, for example, twelve pole teeth 61a and twelve pole teeth 61b. An angle between adjacent pole teeth 61a and 61b is 15 degrees. When an electric current is supplied to a coil 61c of the A-phase stator 61, the pole teeth 61a and the pole teeth 61b have opposite polarities.

The B-phase stator 62 includes a plurality of claw-pole-type pole teeth 62a and 62b at its inner periphery. The tip end of each pole tooth 62a faces downward, and the tip end of each pole tooth 62b faces upward. The pole teeth 62a and the pole teeth 62b are alternately arranged at equal angular intervals in the peripheral direction. In the electric valve device 1, the B-phase stator 62 includes, for example, twelve pole teeth 62a and twelve pole teeth 62b. An angle between adjacent pole teeth 62a and 62b is 15 degrees. When an electric current is supplied to a coil 62c of the B-phase stator 62, the pole teeth 62a and the pole teeth 62b have opposite polarities.

The A-phase stator 61 and the B-phase stator 62 are coaxially disposed. The A-phase stator 61 is in contact with the B-phase stator 62. When viewed in the direction of the axis L, the angle between each of the pole teeth 61a of the A-phase stator 61 and a corresponding adjacent one of the pole teeth 62a of the B-phase stator 62 is 7.5 degrees. In other words, the B-phase stator 62 is situated at a position reached by rotating 7.5 degrees around the axis L with respect to the A-phase stator 61 from a position where the pole teeth 61a and the pole teeth 62a are arranged in the direction of the axis L. As shown in Fig. 4A, terminals A1 and A2 of the coil 61c of the A-phase stator 61 and terminals B1 and B2 of the coil 62c of the B-phase stator 62 are connected to a motor driver 77 of the electric valve control device 70.

The can 20 is disposed inside the stator 60. The rotor 41 is disposed inside the can 20. The stator 60 and the rotor 41 constitute a stepping motor 66.

The rotor 41 is rotated by inputting a pulse P to the stepping motor 66. Specifically, the rotor 41 is rotated by supplying a driving current corresponding to the pulse P to the stator 60 of the stepping motor 66. In the present description, "inputting a pulse P to the stepping motor 66" is synonymous with "supplying a driving current corresponding to the pulse P to the stator 60 of the stepping motor 66".

Pulses P[1] to P[8] shown in Fig. 4B are input to the stepping motor 66 in order.

When the rotor 41 is to be rotated in a first direction (clockwise direction in Fig. 3), the pulses P are input cyclically in ascending order (in the order of the pulses P[1] to P[8]) to the stepping motor 66. When the rotor 41 rotates in the first direction, the rotor 41 and the valve stem holder 42 move downward due to the screw feed action between the internal thread 42c of the valve stem holder 42 and the external thread 43c of the guide bush 43. The rotor 41 (the valve stem holder 42) pushes the valve member 30 downward via the valve closing spring 47. The valve member 30 moves downward and the valve portion 33 comes into contact with the valve seat 18. The position of the rotor 41 at this time is a valve closing position Rc. When the rotor 41 is further rotated in the first direction from this state, the valve closing spring 47 is compressed and the rotor 41 and the valve stem holder 42 move further downward. The valve member 30 does not move downward. When the movable stopper 42s of the valve stem holder 42 comes into contact with the fixed stopper 44s of the stopper member 44, the rotation of the rotor 41 in the first direction is restricted. The position of the rotor 41 at this time is a reference position Rx. The movable stopper 42s and the fixed stopper 44s constitute a stopper mechanism 49 that restricts the rotation of the rotor 41 in the first direction.

When the rotor 41 is to be rotated in a second direction (counterclockwise direction in Fig. 3) opposite to the first direction, the pulses P are input cyclically in descending order (in the order of the pulses P[8] to P[1]) to the stepping motor 66. When the rotor 41 rotates in the second direction, the rotor 41 and the valve stem holder 42 move upward due to the screw feed action between the internal thread 42c of the valve stem holder 42 and the external thread 43c of the guide bush 43. The rotor 41 (the valve stem holder 42) pushes the fixed member 45 upward. The valve member 30 moves upward together with the fixed member 45 and the valve member 30 moves away from the valve seat 18. The rotor 41 is considered to be at a valve opening position Ro when the flow rate of a fluid in the valve port 17 reaches a predetermined set value in a predetermined flow-rate measuring environment. The set value is set as appropriate in accordance with, for example, the configuration or application of the electric valve device 1. The position of the rotor 41 when the rotor 41 has been rotated in the second direction from the reference position Rx by inputting a predetermined number of pulses (for example, 500 pulses) to the stepping motor 66 is a full-open position Rz.

When the rotor 41 rotates in the first direction, the valve port 17 is closed, and, when the rotor 41 rotates in the second direction, the valve port 17 opens. That is, the first direction is a valve closing direction, and the second direction is a valve opening direction.

When the rotor 41 is in the valve closing position Rc, the valve member 30 is in contact with the valve seat 18 and the valve port 17 is closed. As a result, the opening degree of the valve port 17 is a minimum opening degree (0%). When the rotor 41 is in the full-open position Rz, the valve member 30 is maximally separated from the valve seat 18 within a practical operation range of the electric valve 5. As a result, the opening degree of the valve port 17 is a maximum opening degree (100%). The opening degree of the valve port 17 is related to the valve opening degree of the electric valve 5.

The electric valve control device 70 controls the electric valve 5 such that the valve opening degree of the electric valve 5 is within a range from a minimum opening degree to a maximum opening degree. The minimum opening degree and the maximum opening degree of the valve opening degree used by the electric valve control device 70 to control the electric valve 5 are described. The valve opening degree of the electric valve 5 when the rotor 41 is situated at the position (the reference position Rx) where the rotation of the rotor 41 in the first direction is restricted by the stopper mechanism 49 is the minimum opening degree (0%). The valve opening degree of the electric valve 5 when the rotor 41 is situated at a position where the opening degree of the valve port 17 is an opening degree allowing a flow of a refrigerant having a flow rate that is 90% of a maximum flow rate (for example, a Cv value) of the electric valve 5 is the maximum opening degree (1000).

However, the setting of the minimum opening degree and the maximum opening degree of the valve opening degree used by the electric valve control device 70 to control the electric valve 5 are not limited to the minimum opening degree and the maximum opening degree described above. For example, the valve opening degree of the electric valve 5 when the rotor 41 is at the valve opening position Ro may be the minimum opening degree (0%). The valve opening position Ro is, for example, a position where the valve leakage amount of the electric valve 5 has reached a predetermined flow rate as the rotor 41 rotates in the valve opening direction from the valve closing position Rc. The valve opening degree of the electric valve 5 when the rotor 41 is at a position just before the external thread 43c and the internal thread 42c are unscrewed may be the maximum opening degree (100%). The valve opening degree of the electric valve 5 when the rotor 41 is at the full-open position Rz may be the maximum opening degree (100%).

The electric valve control device 70 includes a circuit board 71 on which a plurality of electronic components (not shown) are mounted. As shown in Fig. 1, the electric valve control device 70 includes a non-volatile memory 75, a communication device 76, the motor driver 77, and a computer 80. The electric valve control device 70 controls the electric valve 5 on the basis of an instruction received from the air conditioning control device 110.

The non-volatile memory 75 stores data that needs to be held even if a power supply is turned off. The non-volatile memory 75 is, for example, EEPROM or flash memory. The non-volatile memory 75 functions as a non-volatile storage section.

A portion of the non-volatile memory 75 serves as a state storage section M1 that stores state information J1 indicating a state of the electric valve 5 at a previous end-of-control time. Another portion of the non-volatile memory 75 serves as a previous valve opening degree storage section M2 that stores previous valve opening degree information J2 indicating the valve opening degree of the electric valve 5 at the previous end-of-control time.

The communication device 76 is connected to the air conditioning control device 110 through a wired communication bus 120 and is capable of communication therewith. For example, the air conditioning system 100 utilizes a communication system such as Local Interconnect Network (LIN) or Controller Area Network (CAN). Note that the communication device 76 may be connected to the air conditioning control device 110 and is capable of wireless communication therewith.

The motor driver 77 supplies the driving current to the stepping motor 66 on the basis of the pulse P that is input from the computer 80. As shown in Fig. 4A, the motor driver 77 is connected to the terminals A1 and A2 of the coil 61c of the A-phase stator 61 and to the terminals B1 and B2 of the coil 62c of the B-phase stator 62. Fig. 4B shows an example of correspondence between the pulses P and the driving currents that are supplied by the motor driver 77. In Fig. 4B, (+) indicates that the driving current flowing from the terminal A1 to the terminal A2 is supplied or that the driving current flowing from the terminal B1 to the terminal B2 is supplied; (-) indicates that the driving current flowing from the terminal A2 to the terminal A1 is supplied or that the driving current flowing from the terminal B2 to the terminal B1 is supplied; and (0) indicates that no driving current is supplied.

The computer 80 is a microcomputer for an embedded device in which, for example, a CPU, ROM, RAM, an input-output interface (I/O), and an analog-to-digital converter (ADC) are incorporated into a single package. The computer 80 may include the non-volatile memory 75, the communication device 76, and the motor driver 77.

The ROM of the computer 80 stores, for example, programs executed by the CPU and various set values that do not need to be rewritten.

The RAM of the computer 80 is a working memory that is used when the CPU executes a program. A portion of the RAM of the computer 80 serves as a present valve opening degree storage section M3 that stores present valve opening degree information J3 indicating the present valve opening degree of the electric valve 5. Another portion of the RAM of the computer 80 serves as a diagnosis result storage section M4 that stores startup diagnosis result information J4 indicating a startup diagnosis result of the electric valve 5 and normal operation diagnosis result information J5 indicating a normal operation diagnosis result of the electric valve 5.

Next, an example of a process that is executed by the electric valve control device 70 is described with reference to Figs. 5 and 6.

When a power supply is turned on or when the electric valve control device 70 (specifically, the computer 80) is restored from a sleep mode to an operation mode, the electric valve control device 70 executes a process shown in the flowchart in Figs. 5 and 6. Steps S110 to S170 in Fig. 5 constitute a startup process, and Steps S210 to S290 in Fig. 6 constitute a normal operation process.

In the startup process, when the state at the previous end-of-control time (end state) is "normal" (Y in S110), the electric valve control device 70 sets "the valve opening degree at the previous end-of-control time" as the present valve opening degree of the electric valve 5 (S120), and stores "abnormal end" as a state at an end-of-control time (S130).

Specifically, when the state information J1 indicates "normal end", the electric valve control device 70 stores in the present valve opening degree storage section M3 the previous valve opening degree information J2 as the present valve opening degree information J3. The electric valve control device 70 also stores in the state storage section M1 information indicating "abnormal end" as the state information J1. By setting the information indicating "abnormal end" as the state information J1 in the startup process, the electric valve control device 70 is capable of detecting that "abnormal end" has occurred when, for example, the electric valve control device 70 restarts after a sudden power loss has occurred.

When the state at the previous end-of-control time is "abnormal" (N in S110), the electric valve control device 70 sets "the maximum opening degree" as the present valve opening degree of the electric valve 5 (S140).

Specifically, when the state information J1 indicates "abnormal end", the electric valve control device 70 stores in the present valve opening degree storage section M3 information indicating the maximum opening degree (100%) as the present valve opening degree information J3.

The electric valve control device 70 performs a startup diagnosis of the electric valve 5 (S150). As the startup diagnosis, the electric valve control device 70 confirms, for example, whether or not a power supply voltage is within a proper range or whether or not the rotor rotates properly in accordance with the pulse P that is input to the stepping motor 66. The electric valve control device 70 stores in the diagnosis result storage section M4 information indicating a startup diagnosis result as the startup diagnosis result information J4.

When the startup diagnosis result is "normal" (Y in S160), the electric valve control device 70 proceeds to the normal operation process (S210). When the startup diagnosis result is "abnormal" (N in S160), the electric valve control device 70 sets "the maximum opening degree" as the present valve opening degree of the electric valve 5 (S170) and proceeds to the normal operation process (S210).

Specifically, when the startup diagnosis result information J4 indicates "normal", the electric valve control device 70 proceeds to Step S210. When the startup diagnosis information J4 indicates "abnormal", the electric valve control device 70 stores in the present valve opening degree storage section M3 information indicating the maximum opening degree (100%) as the present valve opening degree information J3, and proceeds to Step S210.

In the normal operation process, the electric valve control device 70 performs a normal operation diagnosis of the electric valve 5 (S210). As the normal operation diagnosis, for example, the electric valve control device 70 confirms whether or not a power supply voltage is within a proper range, whether or not a step-out has occurred in the stepping motor 66, or the like. Then, the electric valve control device 70 stores in the diagnosis result storage section M4 information indicating a normal operation diagnosis result as the normal operation diagnosis result information J5. Note that the electric valve control device 70 may perform the normal operation diagnosis in, for example, an interruption process that is executed with various sensor outputs, a timer, or the like as a trigger, or other processes that are executed concurrently with the process shown in the present flowchart.

When the normal operation diagnosis result is "normal" (Y in S220), the electric valve control device 70 proceeds to a process of receiving an instruction from the air conditioning control device 110 (S240). When the normal operation diagnosis result is "abnormal" (N in S220), the electric valve control device 70 sets "the maximum opening degree" as the present valve opening degree of the electric valve 5 (S230), and proceeds to the process of receiving an instruction from the air conditioning control device 110 (S240).

Specifically, when the normal operation diagnosis result information J5 indicates "normal", the electric valve control device 70 proceeds to Step S240. When the normal operation diagnosis result information J5 indicates "abnormal", the electric valve control device 70 stores in the present valve opening degree storage section M3 information indicating the maximum opening degree (100%) as the present valve opening degree information J3, and proceeds to Step S240.

When the instruction received from the air conditioning control device 110 is not a sleep instruction (Y in S240, N in S250), the electric valve control device 70 executes a process according to the instruction (S260), and returns to the normal operation diagnosis (S210).

For example, when the electric valve control device 70 receives an instruction to change the valve opening degree of the electric valve 5, the electric valve control device 70 inputs to the stepping motor 66 the number of the pulses P calculated on the basis of the present valve opening degree information J3. The electric valve control device 70 obtains the direction of the rotation of the rotor 41 and the number of the pulses P for changing the valve opening degree of the electric valve 5 from the valve opening degree indicated in the present valve opening degree information J3 to the valve opening degree specified by the instruction. When the pulse P is input to the stepping motor 66, the rotor 41 rotates through an angle corresponding to the pulse P in the valve closing direction or the valve opening direction. This changes the valve opening degree of the electric valve 5 to the valve opening degree specified by the instruction. Then, in accordance with the pulse P input, the electric valve control device 70 stores in the present valve opening degree storage section M3 information indicating the valve opening degree as the present valve opening degree information J3.

In the normal operation process, the electric valve control device 70 changes the valve opening degree within the range from the minimum opening degree (0%) to the maximum opening degree (100%). For example, when the valve opening degree indicated in the present valve opening degree information J3 reaches the maximum opening degree (100%) while the valve opening degree of the electric valve 5 is being increased on the basis of the instruction received by the electric valve control device 70, the electric valve control device 70 stops changing the valve opening degree. When the electric valve control device 70 receives an instruction to increase the valve opening degree when the valve opening degree indicated in the present valve opening degree information J3 is the maximum opening degree (100%), the electric valve control device 70 does not change the valve opening degree and cancels the instruction. When the present valve opening degree information J3 indicates the maximum opening degree (100%), the electric valve control device 70 does not rotate the rotor 41 in the valve opening direction regardless of whether or not the present valve opening degree information J3 indicates the actual valve opening degree. Note that, when the electric valve control device 70 stops the execution of a process according to an instruction or cancels an instruction without executing a process according to the instruction, the electric valve control device 70 may transmit a response that the instruction has not ended normally to the air conditioning control device 110. When the electric valve control device 70 receives an instruction to search an origin, the electric valve control device 70 inputs to the stepping motor 66 a sufficient number of the pulses P for rotating the rotor 41 in the first direction from the full-open position Rz to the reference position Rx. When the rotor 41 is positioned at the reference position Rx, the electric valve control device 70 sets the minimum opening degree (0%) in the present valve opening degree information J3. Specifically, when the rotor 41 is positioned at the reference position Rx, the electric valve control device 70 stores in the present valve opening degree storage section M3 information indicating the minimum opening degree (0%) as the present valve opening degree information J3.

When a period in which the electric valve control device 70 does not receive an instruction from the air conditioning control device 110 is less than four seconds (N in S240, N in S270), the electric valve control device 70 returns to the normal operation diagnosis (S210).

When an instruction received by the electric valve control device 70 from the air conditioning control device 110 is a sleep instruction (Y in S240, Y in S250) or when a period in which the electric valve control device 70 does not receive an instruction from the air conditioning control device 110 is 4 seconds or more (N in S240, Y in S270), the electric valve control device 70 proceeds to the next Step S280 to change its mode to the sleep mode.

When the startup diagnosis result and the normal operation diagnosis result are "normal" (Y in S280), the electric valve control device 70 stores the present valve opening degree of the electric valve 5 as a valve opening degree at the end-of-control time, stores "normal end" as the state at the end-of-control time (S290), and changes its mode to the sleep mode.

Specifically, when the startup diagnosis result information J4 and the normal operation diagnosis result information J5 are both pieces of information indicating "normal", the electric valve control device 70 stores in the previous valve opening degree storage section M2 the present valve opening degree information J3 as the previous valve opening degree information J2, and stores in the state storage section M1 information indicating "normal end" as the state information J1. Then, the electric valve control device 70 ends the process shown in the present flowchart and changes its mode to the sleep mode.

When at least one of the startup diagnosis result and the normal operation diagnosis result is "abnormal" (N in S280), the electric valve control device 70 changes its mode to the sleep mode.

Specifically, when at least one of the piece of the startup diagnosis result information J4 and the piece of the normal operation diagnosis result information J5 is information indicating "abnormal", the electric valve control device 70 ends the process shown in the present flowchart and changes its mode to the sleep mode.

As described above, the electric valve device 1 includes the electric valve 5 and the electric valve control device 70. The electric valve control device 70 has the present valve opening degree information J3 indicating the present valve opening degree of the electric valve 5, and changes the valve opening degree of the electric valve 5 within the range from the minimum opening degree to the maximum opening degree on the basis of the present valve opening degree information J3. When the electric valve control device 70 detects an abnormality in the electric valve 5 (1: when the state at the previous end-of-control time is "abnormal", 2: when the startup diagnosis result is "abnormal", 3: when the normal operation diagnosis result is "abnormal"), the electric valve control device 70 sets the maximum opening degree in the present valve opening degree information J3.

When the electric valve control device 70 detects the abnormality in the electric valve 5, the electric valve control device 70 assumes the present valve opening degree of the electric valve 5 as the maximum opening degree (100%) since the information regarding the present valve opening degree of the electric valve 5 cannot be relied upon and the actual valve opening degree of the electric valve 5 is unknown. When the information regarding the present valve opening degree of the electric valve 5 indicates the maximum opening degree, the electric valve control device 70 does not rotate the rotor 41 in the valve opening direction. That is, when the electric valve control device 70 detects the abnormality in the electric valve 5, the electric valve control device 70 inhibits the actual valve opening degree of the electric valve 5 from increasing further.

Therefore, when the electric valve control device 70 detects the abnormality in the electric valve 5, the electric valve control device 70 assumes that the present valve opening degree of the electric valve 5 is the maximum opening degree (100%) regardless of the actual valve opening degree of the electric valve 5. Consequently, the electric valve control device 70 is capable of inhibiting the rotor 41 from rotating in the valve opening direction beyond a position corresponding to the actual valve opening degree of the electric valve 5 when the electric valve control device 70 detects the abnormality. Thus, the electric valve control device 70 is capable of suppressing the position of the rotor 41 from existing beyond the position corresponding to the maximum opening degree of the electric valve 5. For example, in a configuration in which the position of the rotor 41 corresponding to the maximum opening degree of the electric valve 5 is the full-open position Rz, it is possible to suppress the position of the rotor 41 from existing beyond the full-open position Rz. This configuration enables another stopper mechanism that restricts the rotation of the rotor 41 in the valve opening direction in the electric valve 5 to be unnecessary. As a result, manufacturing costs of the electric valve 5 can be reduced.

The electric valve control device 70 includes a non-volatile memory 75 that stores the state information J1 indicating the state of the electric valve 5 at the previous end-of-control time and the previous valve opening degree information J2 indicating the valve opening degree of the electric valve 5 at the previous end-of-control time. When the state information J1 is information indicating "normal end" when control of the electric valve 5 is started, the electric valve control device 70 sets in the present valve opening degree information J3 the valve opening degree that is indicated in the previous valve opening degree information J2, and sets in the state information J1 information indicating "abnormal end". When the state information J1 is information indicating "abnormal end" when control of the electric valve 5 is started, the electric valve control device 70 sets the maximum opening degree (100%) in the present valve opening degree information J3. When the state information J1 is information indicating "normal end" when control of the electric valve 5 is started, and when no abnormality is detected in the electric valve 5 after starting the control of the electric valve 5, the electric valve control device 70 sets the information indicating "normal end" in the state information J1 when the control of the electric valve 5 ends.

Therefore, when the state of the electric valve 5 at the previous end-of-control time is "normal", the electric valve control device 70 continues setting the valve opening degree of the electric valve 5 at the previous end-of-control time. When the state of the electric valve 5 at the previous end-of-control time is "abnormal", the electric valve control device 70 assumes the actual valve opening degree of the electric valve 5 at a control start time to be the maximum opening degree (100%). Therefore, even when the state of the electric valve 5 at the previous end-of-control time is "abnormal", the electric valve control device 70 is capable of inhibiting the rotor 41 from rotating in the valve opening direction beyond the position corresponding to the actual valve opening degree at the control start time of the electric valve 5. In addition, the electric valve control device 70 is capable of detecting that "abnormal end" has occurred when, for example, the electric valve control device 70 restarts after a sudden power loss has occurred.

Although the electric valve 5 includes the stepping motor 66, the electric valve 5 may include another type of motor instead of the stepping motor 66.

Although the electric valve 5 includes the driving mechanism 40 that does not reduce the speed of rotation of the rotor 41, the electric valve 5 may include, instead of the driving mechanism 40, a driving mechanism including a speed-reduction mechanism that reduces the speed of rotation of the rotor 41.

In the present description, each term indicating a shape, such as "circular cylindrical" or "circular columnar", is also used for members or portions of members substantially having the shape indicated by the term. For example, "circular cylindrical member" also refers to a circular cylindrical member and a substantially circular cylindrical member.

Although the embodiment of the present invention is described above, the present invention is not limited to the embodiment. Embodiments obtained by a person skilled in the art appropriately adding, removing, or modifying components according to the embodiment described above, and an embodiment obtained by appropriately combining features of the embodiment are included in the scope of the present invention as long as they have the gist of the present invention.

### Reference Signs List

1 ... electric valve device, 5 ... electric valve, 10 ... valve body, 11 ... body member, 11a ... fitting hole, 11b ... through hole, 11d ... planar part, 13 ... connecting member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... valve portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... supporting portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... coil, 62 ... B-phase stator, 62a ... pole tooth, 62b ... pole tooth, 62c ... coil, 66 ... stepping motor, 70 ... electric valve control device, 71 ... circuit board, 75 ... non-volatile memory, 76 ... communication device, 77 ... motor driver, 80 ... computer, 100 ... air conditioning system, 101 ... compressor, 102 ... condenser, 103 ... evaporator, 105 ... pipe, 110 ... air conditioning control device, 120 ... wired communication bus, A1, A2, B1, B2 ... terminal, L ... axis, Rc ... valve closing position, Ro ... valve opening position, Rx ... reference position, Rz ... full-open position, J1 ... state information, J2 ... previous valve opening degree information, J3 ... present valve opening degree information, J4 ... startup diagnosis result information, J5 ... normal operation diagnosis result information, M1 ... state storage section, M2 ... previous valve opening degree storage section, M3 ... present valve opening degree storage section, M4 ... diagnosis result storage section

## Claims

1. An electric valve control device for controlling an electric valve including a motor,
wherein the electric valve control device has present valve opening degree information indicating a present valve opening degree of the electric valve and changes a valve opening degree of the electric valve within a range from a minimum opening degree to a maximum opening degree based on the present valve opening degree information, and
wherein, when the electric valve control device detects an abnormality in the electric valve, the electric valve control device sets the maximum opening degree in the present valve opening degree information.

2. The electric valve control device according to claim 1, comprising:
a non-volatile storage section that stores state information indicating a state of the electric valve at a previous end-of-control time and previous valve opening degree information indicating a valve opening degree of the electric valve at the previous end-of-control time,
wherein, when the state information is information indicating a normal end when control of the electric valve is started, the electric valve control device sets in the present valve opening degree information the valve opening degree indicated in the previous valve opening degree information, and sets in the state information information indicating an abnormal end,
wherein, when the state information is the information indicating the abnormal end when the control of the electric valve is started, the electric valve control device sets the maximum opening degree in the present valve opening degree information, and
wherein, when the state information is the information indicating the normal end when the control of the electric valve is started, and when no abnormality is detected in the electric valve after starting the control of the electric valve, the electric valve control device sets in the state information the information indicating the normal end when the control of the electric valve ends.

3. An electric valve device comprising:
an electric valve; and the electric valve control device according to claim 1 or claim 2.
